# EUROPÄISCHE PATENTSCHRIFT

(11) **EP 1 024 989 B1**
(45) Veröffentlichungstag und Bekanntmachung des Hinweises auf die Patenterteilung: **19.12.2001**
(21) Anmeldenummer: 98956869.6
(22) Anmeldetag: 23.10.1998
(51) Int. Cl.: B62D 5/083

(54) **DREHSCHIEBERVENTIL FÜR HILFSKRAFTLENKUNGEN VON KRAFTFAHRZEUGEN**
ROTARY SLIDE VALVE FOR POWER ASSISTED STEERING OF MOTOR VEHICLES
SOUPAPE A TIROIR ROTATIF POUR DIRECTIONS ASSISTEES DE VEHICULES AUTOMOBILES

(30) Priorität: 29.10.1997 DE 19747639
(43) Veröffentlichungstag der Anmeldung: 09.08.2000
(73) Patentinhaber: ZF FRIEDRICHSHAFEN Aktiengesellschaft, 88038 Friedrichshafen (DE)
(72) Erfinder: BIEBER, Jürgen, D-73529 Schwäbisch Gmünd (DE); BREITWEG, Werner, D-73529 Bargau (DE); SCHÄNZEL, Rainer, D-73457 Essingen (DE)
(74) Vertreter: Wiechmann, Manfred
(86) Internationale Anmeldenummer: EP9806735
(87) Internationale Veröffentlichungsnummer: WO9921746

(56) Entgegenhaltungen:
- DE-A- 4 433 599
- DE-A- 19 633 633

## Beschreibung

Die Erfindung betrifft ein Drehschieberventil für Hilfskraftlenkungen von Kraftfahrzeugen nach dem Oberbegriff des Anspruches 1. Das Drehschieberventil enthält zwei Ventilelemente, die koaxial ineinander beweglich angeordnet sind und maximal um den Verdrehweg einer Totgangkupplung relativ zueinander verdrehbar sind. Dabei ist das erste Ventilelement, das mit einem Ventil-Eingangsglied verbunden ist, als radial außenliegender Drehschieber ausgebildet. Das zweite Ventilelement ist mit einem Ventil-Ausgangsglied drehfest verbunden und ist als radial innenliegende Steuerbuchse ausgeführt, die in einer Axialbohrung des Drehschiebers geführt ist. Beide Ventilelemente weisen Steuer-Längsnuten auf, die wenigstens zu einem Teil in ihrer axialen Länge begrenzt sind und miteinander zusammenwirken zur Steuerung eines Druckmittels zu und von zwei Arbeitsräumen eines Servomotors. Zur Rückstellung der beiden Ventilelemente aus einer ausgelenkten Stellung in ihre Neutralstellung dient eine Drehstabfeder.

Zur Unterstützung der Drehstabfeder ist zwischen dem Drehschieber und dem Ventil-Ausgangsglied eine Zentriereinrichtung angeordnet, die zwei gegeneinander verdrehbare Zentrierelemente enthält mit wenigstens einem zwischen den beiden Zentrierelementen liegenden Wälzkörper. Dabei ist das eine Zentrierelement mit einem Rückwirkungskolben drehfest verbunden.

Ein derartiges Drehschieberventil ist bekannt aus der DE-A1-44 33 599. Dieses Drehschieberventil weist den Vorteil auf, daß durch die besondere Anordnung der Steuerbuchse im Inneren des Drehschiebers die Außenabmessungen des gesamten Ventils sehr klein gehalten werden können. Die Zentrierung erfolgt bei diesem Drehschieberventil über die Drehstabfeder. Eine Drehstabfeder hat bekanntermaßen die Eigenschaft, daß im eigentlichen Mittenbereich des Drehschieberventils die Rückstellung durch die Drehstabfeder nur sehr klein ist. Deshalb wird zusätzlich zu der Drehstabfeder eine Zentriereinrichtung vorzusehen, die insbesondere im direkten Mittenbereich des Drehschieberventils eine sehr genaue Zentrierung ermöglicht. Die zusätzliche Zentriereinrichtung und insbesondere die Längsführung des einen Zentrierelementes benötigt bei dieser Ausführung in axialer Richtung zusätzlichen Bauraum.

Durch die Anordnung der Zentriereinrichtung zwischen dem Drehschieber und dem Ventil-Ausgangsglied kann ein Zentrierelement der Zentriereinrichtung mit dem Ventil-Ausgangsglied in einer vorbestimmten Stellung festgelegt werden. Dadurch kann die Zentriereinrichtung in bezug auf die Zentrierlage und die Zentrierkraft noch nach der Herstellung der Einzelteile leicht eingestellt werden. Da sich der Rückwirkungskolben zusammen mit dem Drehschieber dreht, entsteht zwischen dem Rückwirkungskolben und einem Ventilgehäuse Relativbewegung. Da der Rückwirkungskolben gegenüber dem Ventilgehäuse abgedichtet sein muß, entsteht dort eine Reibung, die die an einem Lenkhandrad aufzubringende Handkraft direkt beeinflußt.

Der Erfindung liegt die Aufgabe zugrunde, das bekannte Drehschieberventil derart zu verbessern, daß die Reibung reduziert wird. Gleichzeitig soll die Länge des Drehschieberventils verkürzt werden.

Diese Aufgabe wird durch das im Anspruch 1 gekennzeichnete Drehschieberventil gelöst. Vorteilhafte und zweckmäßige Ausgestaltungen der Erfindung sind in den Unteransprüchen angegeben.

Die Lösung erfolgt dadurch, daß bei dem gattungsbildenden Drehschieberventil das mit dem Rückwirkungskolben fest verbundene Zentrierelement unverdrehbar, jedoch axial verschiebbar mit dem Ventil-Ausgangsglied verbunden ist. Das andere Zentrierelement ist mit dem Drehschieber in einer vorbestimmten Stellung unverdrehbar und unverschiebbar verbunden. Der Rückwirkungskolben ist im Bereich der Zentriereinrichtung radial außerhalb des Drehschiebers um diesen herum angeordnet und ragt in axialer Richtung in den Bereich des Drehschiebers vor.

Bei der erfindungsgemäßen Anordnung ist der Rückwirkungskolben mit dem Ventil-Ausgangsglied drehfest, jedoch axial verschiebbar, verbunden. Dadurch wird die Reibung des Dichtringes zwischen dem Rückwirkungskolben und dem Ventilgehäuse von der Primärseite auf die Sekundärseite des Drehschieberventils verlegt. Das Rückwirkmoment kann spielfrei erzeugt werden, so daß sich eine exakte Funktionsweise ergibt. Bezüglich der Rückstellung des Drehschieberventils in seine Neutralstellung entsteht deshalb durch die Reibung an dem Dichtring des Rückwirkungskolbens keine zusätzliche Hysterese. Durch ein "Ineinanderschachteln" des Rückwirkungskolbens und des Drehschiebers, d. h. dadurch, daß der Rückwirkungskolben in den Bereich des Drehschiebers hineinragt, ergibt sich eine kompakte und kurze Bauweise.

Die axiale Abmessung des Drehschieberventils wird weiter verringert, wenn gemäß Patentanspruch 2 die drehfeste Verbindung des Rückwirkungskolbens mit dem Ventil-Ausgangsglied über einen Metallfaltenbalg erfolgt. Dieser Metallfaltenbalg ist radial außerhalb der Zentrierelemente eingebaut, so daß auch hier durch "Ineinanderschachtein" axiale Baulänge gespart wird.

Der Metallfaltenbalg dient primär dazu, die Verdrehsicherung des Rückwirkungskolbens gegenüber dem Ventil-Ausgangsglied zu schaffen. Durch eine zusätzliche Vorspannung des Metallfaltenbalges, durch die der Metallfaltenbalg auch als Feder wirkt, kann die Ventilkennlinie in ihrer Lage direkt beeinflußt werden.

Besonders einfach kann die Verdrehsicherung des Rückwirkungskolbens gestaltet werden, wenn der Metallfaltenbalg und der Rückwirkungskolben fest miteinander verbunden sind. Dann muß nach der Einjustierung der Zentriereinrichtung der Metallfaltenbalg nur noch durch Form- oder Reibschluß mit dem Ventil-Ausgangsglied fest verbunden werden.

Soll bei der Montage des Drehschieberventils mit der Zentriereinrichtung auch noch der Schritt des Verbindens des Metallfaltenbalges mit dem Ventil-Ausgangsglied eingespart werden, so kann an dem Metallfaltenbalg eine Buchse angebracht werden, die einen Reib- oder Kleberbelag aufweist, der mit einem Reib- oder Kleberbelag an einer Fläche des Rückwirkungskolbens durch die Vorspannung des Metallfaltenbalges bzw. durch ein Aushärten des Klebers eine drehfeste Reib- bzw. Klebverbindung ergibt. Der Metallfaltenbalg muß dann nicht stellungsgebunden montiert werden.

Im folgenden wird die Erfindung anhand zweier in der Zeichnung dargestellter Ausführungsbeispiele näher erläutert.
Es zeigen:
- Fig. 1 und 2: je einen Längsschnitt durch das erfindungs- gemäße Drehschieberventil mit einem schematisch dargestellten, zugehörigen Lenkgetriebe in den beiden Ausführungsbeispielen und
- Fig. 3: eine Teilansicht in Richtung des Pfeiles III in Fig. 1.

Ein Drehschieberventil 1 ist in einem Ventilgehäuse 2 einer Hilfskraftlenkung 3 enthalten.

Das Drehschieberventil 1 enthält ein erstes Ventilelement in der Form eines Drehschiebers 4, der in einer Ventilbohrung 5 des Ventilgehäuses 2 drehbar geführt ist. Der Drehschieber 4 weist eine Axialbohrung 6 auf, in der ein zweites Ventilelement in der Form einer Steuerbuchse 7 drehbar geführt ist. Der Drehschieber 4 liegt also radial außen, während die Steuerbuchse 7 radial innen liegt.

Der Drehschieber 4 weist an seiner äußeren Mantelfläche Ringnuten 8, 10, 11 auf, an die eine Servopumpe 12 bzw. zwei Arbeitsräume 13 und 14 eines Servomotors 15 angeschlossen sind. Die Ringnuten 8, 10, 11 sind durch Dichtringe 16 gegenüber der Ventilbohrung 5 abgedichtet. Der Drehschieber 4 ist in dem Ventilgehäuse 2 durch ein Wälzlager 17 und auf einem Ventil-Ausgangsglied 18 durch ein Wälzlager 20 gelagert. In seiner Axialbohrung 6 weist der Drehschieber 4 nicht dargestellte Steuer-Längsnuten auf, die in ihrer axialen Länge begrenzt sind und die zusammenwirken mit Steuer-Längsnuten 21, die an der äußeren Mantelfläche der Steuerbuchse 7 angeordnet sind. Ein Teil der Steuer-Längsnuten 21 ist nach beiden Enden der Steuerbuchse 7 hin abgeschlossen. Einige der Steuer-Längsnuten 21 sind nach einem Ende der Steuerbuchse 7 hin offen und stehen in Verbindung mit einem Druckmittelbehälter 22, aus dem die Servopumpe 12 Druckmittel ansaugt.

Der Drehschieber 4 ist drehfest mit einem Ventil-Eingangsglied 23 verbunden, das als Lenkspindelanschluß ausgebildet ist. Der Lenkspindelanschluß ist beispielsweise mit einer nicht dargestellten Lenkspindel über ein ebenfalls nicht dargestelltes Kreuzgelenk verbunden. Der Drehschieber 4 ist außerdem über eine nicht näher dargestellte Totgangkupplung 24 mit dem Ventil-Ausgangsglied 18 verbunden. Die Totgangkupplung 24 besteht beispielsweise aus einer Innenverzahnung am Drehschieber 4 und einer Außenverzahnung an dem Ventil-Ausgangsglied 18. Das Ventil-Ausgangsglied 18 stellt gleichzeitig ein Eingangsglied für den mechanischen Teil der Hilfskraftlenkung 3 dar und ist beispielsweise mit einem Ritzel 25 verbunden. Das Ritzel 25 ist in einem Lenkgehäuse 26 drehbar gelagert und wirkt zusammen mit einer nicht dargestellten Zahnstange, die in dem Lenkgehäuse 26 axial verschiebbar geführt ist. Der Drehschieber 4 ist außerdem über eine Drehstabfeder 28 mit dem Ventil-Ausgangsglied 18 verbunden. Das Ventil-Ausgangsglied 18 seinerseits ist über einen Stift 30 drehfest mit der Steuerbuchse 7 verbunden, die an ihrem einen Ende in einer Axialbohrung des Ventil-Ausgangsgliedes 18 aufgenommen ist.

Durch diese unterschiedlichen Verbindungen ist eine begrenzte Verdrehung zwischen dem Drehschieber 4 und der Steuerbuchse 7 möglich. Durch die Verdrehung zwischen den beiden Ventilelementen wird das von der Servopumpe 12 geförderte Druckmittel dem jeweiligen Arbeitsraum 13 bzw. 14 des Servomotors 15 zugeführt und von dem entsprechend anderen Arbeitsraum 14 bzw. 13 zurück zu dem Druckmittelbehälter 22 geleitet.

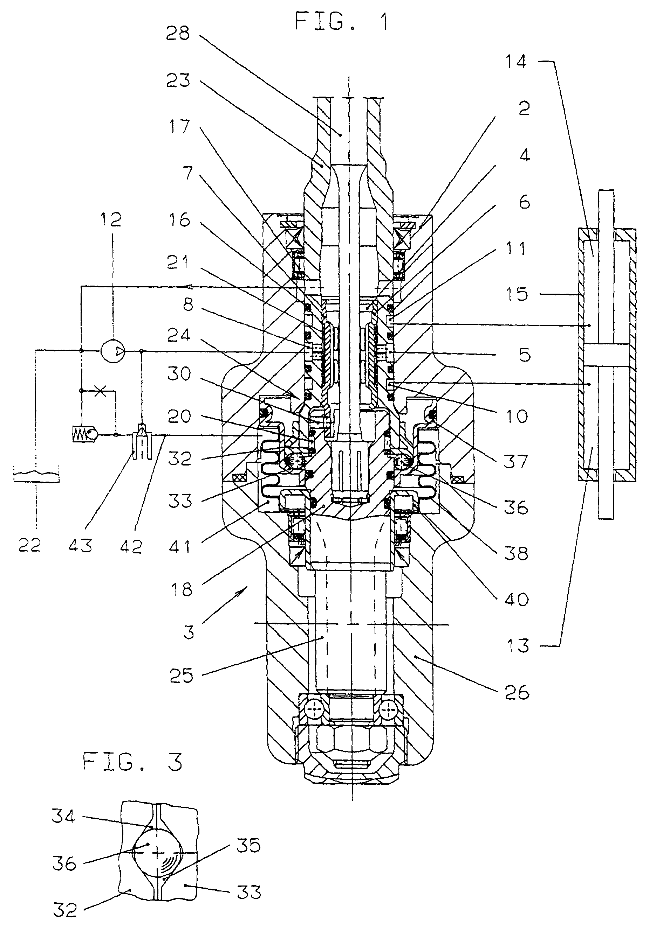

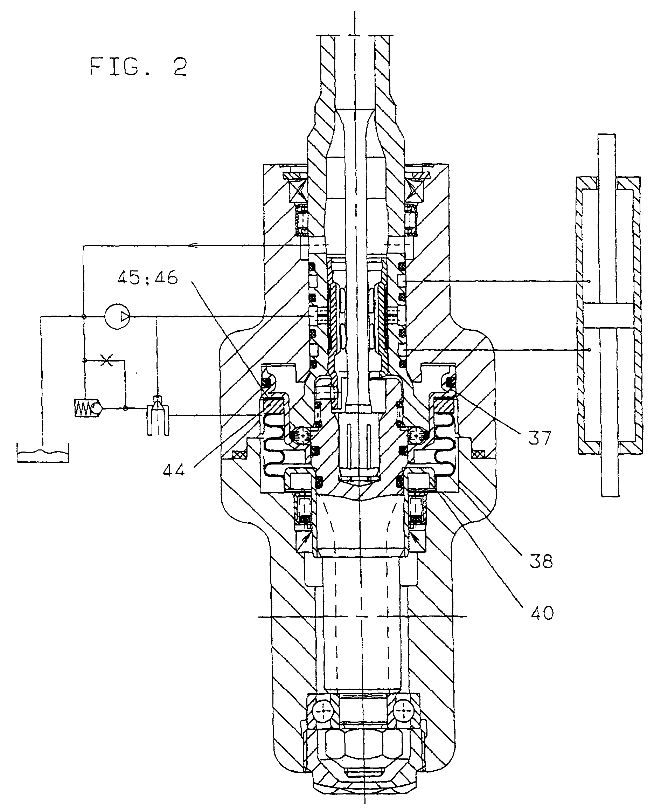

Zwischen dem Drehschieber 4 und dem Ventil-Ausgangsglied 18 ist eine Zentriereinrichtung 31 angeordnet, die zwei gegeneinander verdrehbare Zentrierelemente 32 und 33 enthält. An den einander zugewandten Stirnflächen der beiden Zentrierelemente 32 und 33 der Zentriereinrichtung 31 ist jeweils wenigstens eine Ausnehmung 34 bzw. 35 mit V-förmig zueinander geneigten Schrägflächen ausgebildet. Statt mit V-förmig zueinander geneigten Schrägflächen können die Ausnehmungen 34 und 35 beispielsweise mit bogenförmigen Flächen versehen sein. Zwischen den beiden Ausnehmungen 34 und 35 ist ein Wälzkörper 36, beispielsweise eine Kugel, eingesetzt, der in einem Kunststoffkäfig gehalten ist. Das eine Zentrierelement 32 ist mit dem Drehschieber 4 fest verbunden (Fig. 1) oder mit diesem einteilig ausgebildet (Fig 2). Das andere Zentrierelement 33 ist mit einem Rückwirkungskolben 37 fest verbunden. Der Rückwirkungskolben 37 mit seinem Zentrierelement 33 ist unverdrehbar, jedoch axial verschiebbar, mit dem Ventil-Ausgangsglied 18 verbunden. Diese Verbindung erfolgt durch einen Metallfaltenbalg 38, der einerseits fest mit dem Rückwirkungskolben 37 und andererseits direkt oder beispielsweise über eine Buchse 40 mit dem Ventil-Ausgangsglied 18 fest verbunden ist. Der Rückwirkungskolben 37 ist im Bereich der Zentriereinrichtung 31 radial außerhalb des Drehschiebers 4 um diesen herum angeordnet und ragt in axialer Richtung in den Bereich des Drehschiebers 4 vor. Auf diese Weise beansprucht der Rückwirkungskolben 37 praktisch keinen axialen zusätzlichen Bauraum.

Der Rückwirkungskolben 37 ist sowohl auf dem Ventil-Ausgangsglied 18 als auch in dem Ventilgehäuse 2 dichtend geführt. Er grenzt damit einen Rückwirkungsraum 41 ab, dem ein lenkkraftabhängiger Servodruck über eine Leitung 42 zugeführt werden kann. Der Servodruck kann in bekannter Weise durch einen elektro-hydraulischen Wandler 43 in Abhängigkeit von der Fahrgeschwindigkeit oder von anderen Parametern beeinflußt werden. Der Rückwirkungsraum kann, wie in den Ausführungsbeispielen der Fig. 1 und 2 dargestellt, den Metallfaltenbalg 38 enthalten oder in einem Raum ausgebildet sein, der dem Metallfaltenbalg 38 in bezug auf den Rückwirkungskolben 37 gegenüberliegt. Im letzteren Fall wirkt der Rückwirkungsdruck der Kraft des Metallfaltenbalges 38 entgegen. Der Metallfaltenbalg 38 weist dabei eine relativ starke Vorspannung auf, die beim Anlenken durch die Druckbeaufschlagung mit dem Rückwirkungsdruck entlastet wird.

Der Metallfaltenbalg 38 dient in erster Linie dazu, das Zentrierelement 33 verdrehsicher mit dem Ventil-Ausgangsglied 18 zu verbinden. Soll jedoch die Ventilkennlinie in ihrer Lage beeinflußt werden, so kann der Metallfaltenbalg 38 vorgespannt werden. Durch diese Vorspannung wird eine Federeigenschaft des Metallfaltenbalges 38 erreicht. Um die Ventilkennlinie zu beeinflussen und gegebenenfalls zu justieren, kann die Federvorspannung des Metallfaltenbalges 38 veränderbar ausgeführt sein. Über die Geometrie des Metallfaltenbalges 38, beispielsweise über die Faltenform und die Wanddicke, ist eine Steifigkeitsabstimmung des Drehschieberventils möglich.

Das Drehschieberventil 1 mit der Zentriereinrichtung 31 wird wie folgt montiert und eingestellt: Die beiden Ventilelemente Drehschieber 4 und Steuerbuchse 7 werden relativ zueinander in eine definierte Position, die der hydraulischen Mitte entspricht, gebracht und dort fixiert, indem die beiden Ventilelemente durch die Drehstabfeder 28 miteinander verbunden werden. Das eine Zentrierelement 32 ist fest mit dem Drehschieber 4 verbunden, dadurch ist die Stellung des einen Zentrierelementes 32 in bezug auf die hydraulische Mitte des Drehschieberventils 1 festgelegt. Das zweite Zentrierelement 33, das mit dem Rückwirkungskolben 37 aus einem Teil besteht, sitzt mit dem an dem Rückwirkungskolben 37 vorfixierten Metallfaltenbalg 38 zunächst lose auf der Buchse 40. Die Buchse 40 ist verdrehsicher und axial unverschiebbar auf dem Ventil-Ausgangsglied 18 angeordnet. Nun wird der Rückwirkungskolben 37 mit seinem Zentrierelement 33 und dem Metallfaltenbalg 38 relativ zu dem Zentrierelement 32 bewegt. Sobald die beiden Zentrierelemente 32 und 33 über die Wälzkörper 36 zueinander positioniert sind, wird der Metallfaltenbalg 38 - gegebenenfalls mit einer vorbestimmten Vorspannung - auf der Buchse 30 arretiert.

Das Ausführungsbeispiel der Fig. 2 entspricht weitgehend dem Ausführungsbeispiel nach Fig. 1. Lediglich im Bereich des Metallfaltenbalges 38 bestehen Unterschiede. In dem Ausführungsbeispiel nach Fig. 2 ist der Metallfaltenbalg 38 nicht fest mit dem Rückwirkungskolben 37 verbunden. An dem Metallfaltenbalg 38 ist vielmehr eine Buchse 44 befestigt, die mit einem Reibbelag 45 versehen ist. Eine der Buchse 44 zugewandte Fläche des Rückwirkungskolbens 37 weist ebenfalls einen Reibbelag 46 auf. Die beiden Reibbeläge 45 und 46 bilden nach der Montage des Metallfaltenbalges 38 eine Reibverbindung. Anstelle der Reibbeläge können Kleberbeläge verwendet werden. In diesem Fall wird ein Kleber verwendet, der nicht sofort aushärtet. Dann kann sich die genaue Position der einzelnen Teile vor dem Aushärten selbständig einstellen. Der Vorteil dieser Anordnung ist, daß der Metallfaltenbalg 38 mit der Buchse 40 nicht stellungsgebunden montiert werden muß.

### Bezugszeichen

- 1: Drehschieberventil
- 2: Ventilgehäuse
- 3: Hilfskraftlenkung
- 4: Drehschieber
- 5: Ventilbohrung
- 6: Axialbohrung
- 7: Steuerbuchse
- 8: Ringnut
- 9: -
- 10: Ringnut
- 11: Ringnut
- 12: Servopumpe
- 13: Arbeitsraum
- 14: Arbeitsraum
- 15: Servomotor
- 16: Dichtring
- 17: Wälzlager
- 18: Ventil-Ausgangsglied
- 19: -
- 20: Wälzlager
- 21: Steuer-Längsnut
- 22: Druckmittelbehälter
- 23: Ventil-Eingangsglied
- 24: Totgangkupplung
- 25: Ritzel
- 26: Lenkgehäuse
- 27: Zahnstange
- 28: Drehstabfeder
- 29: -
- 30: Stift
- 31: Zentriereinrichtunng
- 32: Zentrierelement
- 33: Zentrierelement
- 34: Ausnehmung
- 35: Ausnehmung
- 36: Wälzkörper
- 37: Rückwirkungskolben
- 38: Metallfaltenbalg
- 39: -
- 40: Buchse
- 41: Rückwirkungsraum
- 42: Leitung
- 43: Wandler
- 44: Buchse
- 45: Reibbelag
- 46: Reibbelag

## Patentansprüche

1. Drehschieberventil für Hilfskraftlenkungen von Kraftfahrzeugen, mit einem ersten Ventilelement, das mit einem Ventil-Eingangsglied (23) drehfest verbunden ist, und mit einem zweiten Ventilelement, das mit einem Ventil-Ausgangsglied (18) drehfest verbunden ist, und mit folgenden weiteren Merkmalen:
- eines der Ventilelemente ist als radial außenliegender Drehschieber (4) ausgebildet und weist eine Axialbohrung (6) auf und ist mit dem Ventil-Ausgangsglied (18) über eine Drehstabfeder (28) und über eine Totgangkupplung (24) verbunden,
- das andere der Ventilelemente ist als radial innenliegende Steuerbuchse (7) in der Axialbohrung (6) des Drehschiebers (4) geführt,
- die beiden Ventilelemente sind in einem Ventilgehäuse (2) koaxial ineinander beweglich angeordnet und sind maximal um den Verdrehweg der Totgangkupplung (24) relativ zueinander verdrehbar,
- der Drehschieber (4) weist innenliegende und die Steuerbuchse (7) außenliegende, wenigstens teilweise in ihrer axialen Länge begrenzte Steuer-Längsnuten (21) auf, die miteinander zusammenwirken zur Steuerung eines Druckmittels zu und von zwei Arbeitsräumen (13, 14) eines Servomotors (15),
- zwischen dem Drehschieber (4) und dem Ventil-Ausgangsglied (18) ist eine Zentriereinrichtung (31) angeordnet ist, die zwei gegeneinander verdrehbare Zentrierelemente (32, 33) enthält und wenigstens einen zwischen den beiden Zentrierelementen (32, 33) liegenden Wälzkörper (36), wobei der Wälzkörper (36) in Ausnehmungen (34, 35) der beiden Zentrierelemente (32, 33) gehalten ist,
- ein Zentrierelement (33) der Zentriereinrichtung (31) ist mit einem Rückwirkungskolben (37) drehfest verbunden,
- ein Zentrierelement (32) der Zentriereinrichtung (31) ist mit dem Drehschieber (4) drehfest verbunden, **gekennzeichnet durch** folgende Merkmale:
- das mit dem Rückwirkungskolben (37) fest verbundene Zentrierelement (33) ist unverdrehbar, jedoch axial verschiebbar, mit dem Ventil-Ausgangsglied (18) verbunden,
- das andere Zentrierelement (32) ist mit dem Drehschieber (4) in einer vorbestimmten Stellung unverdrehbar und unverschiebbar verbunden,
- der Rückwirkungskolben (37) ist im Bereich der Zentriereinrichtung (31) radial außerhalb des Drehschiebers (4) um diesen herum angeordnet und ragt in axialer Richtung in den Bereich des Drehschiebers (4) vor.

2. Drehschieberventil nach Anspruch 1, **dadurch gekennzeichnet, daß** die drehfeste Verbindung des Rückwirkungskolbens (37) mit dem Ventil-Ausgangsglied (18) über einen Metallfaltenbalg (38) erfolgt.

3. Drehschieberventil nach Anspruch 2, **dadurch gekennzeichnet, daß** der Metallfaltenbalg (38) ausschließlich zur Verdrehsicherung des Rückwirkungskolbens (37) mit dem Ventil-Ausgangsglied (18) ausgebildet ist.

4. Drehschieberventil nach Anspruch 2, **dadurch gekennzeichnet, daß** der Metallfaltenbalg (38) außer zur Verdrehsicherung des Rückwirkungskolbens (37) mit dem Ventil-Ausgangsglied (18) als Feder ausgebildet ist, mit der das eine Zentrierelement (33) der Zentriereinrichtung (31) in Richtung auf das andere Zentrierelement (32) beaufschlagbar ist.

5. Drehschieberventil nach einem der Ansprüche 2 bis 4, **dadurch gekennzeichnet, daß** der Rückwirkungskolben (37) mit dem Metallfaltenbalg (38) fest verbunden ist.

6. Drehschieberventil nach einem der Ansprüche 2 bis 4, **dadurch gekennzeichnet, daß** der Rückwirkungskolben (37) mit dem Metallfaltenbalg (38) über eine an dem Metallfaltenbalg (38) befestigte Buchse (44) durch eine Reib- oder Klebverbindung verbunden ist.

7. Drehschieberventil nach Anspruch 6, **dadurch gekennzeichnet, daß** der Rückwirkungskolben (37) und die an dem Metallfaltenbalg (38) befestigte Buchse (44) an einander zugewandten Flächen mit einem Reib- oder Kleberbelag (45, 46) versehen sind.

8. Drehschieberventil nach einem der Ansprüche 1 bis 7, **dadurch gekennzeichnet, daß** das andere, mit dem Drehschieber (4) in einer vorbestimmten Stellung unverdrehbar und unverschiebbar verbundene Zentrierelement (32) mit dem Drehschieber (4) einteilig ausgebildet ist.

9. Drehschieberventil nach einem der Ansprüche 1 bis 8, **dadurch gekennzeichnet, daß** die Ausnehmungen (34, 35) der beiden Zentrierelemente (32, 33) mit V-förmig zueinander geneigten Schrägflächen oder mit bogenförmigen Flächen ausgeführt sind.

10. Drehschieberventil nach Anspruch 4, **dadurch gekennzeichnet, daß** der Metallfaltenbalg (38) mit einer einstellbaren Federkraft ausgeführt ist.

## Claims

1. Rotary slide valve for power steering systems of motor vehicles, with a first valve element which is connected fixedly in terms of rotation to a valve input member (23), with a second valve element which is connected fixedly in terms of rotation to a valve output member (18), and with the following further features:
- one of the valve elements is designed as a radially outer rotary slide (4) and has an axial bore (6) and is connected to the valve output member (18) via a torsion-bar spring (28) and via a backlash coupling (24),
- the other of the valve elements is guided as a radially inner control bush (7) in the axial bore (6) of the rotary slide (4),
- the two valve elements are arranged so as to be movable coaxially one in the other in a valve housing (2) and are rotatable relative to one another at most by the amount of the rotary travel of the backlash coupling (24),
- the rotary slide (4) has inner and the control bush (7) outer longitudinal control grooves (21) which are limited at least partially in their axial length and cooperate with one another in order to control a pressure medium to and from two working spaces (13, 14) of a servomotor (15),
- between the rotary slide (4) and the valve output member (18) is arranged a centring device (31) which contains two centring elements (32, 33) rotatable relative to one another and at least one rolling body (36) located between the two centring elements (32, 33), the rolling body (36) being held in recesses (34, 35) of the two centring elements (32, 33),
- one centring element (33) of the centring device (31) is connected fixedly in terms of rotation to a reaction piston (37),
- one centring element (32) of the centring device (31) is connected fixedly in terms of rotation to the rotary slide (4),
**characterized by** the following features
- the centring element (33) connected fixedly to the reaction piston (37) is connected non-rotatably, but axially displaceably, to the valve output member (18),
- the other centring element (32) is connected non-rotatably and non-displaceably to the rotary slide (4) in a predetermined position,
- the reaction piston (37) is arranged around the rotary slide (4) radially outside the latter in the region of the centring device (31) and projects in the axial direction into the region of the rotary slide (4).

2. Rotary slide valve according to Claim 1, **characterized in that** the rotationally fixed connection of the reaction piston (37) to the valve output member (18) takes place via a metal concertina (38).

3. Rotary slide valve according to Claim 2, **characterized in that** the metal concertina (38) is designed solely for securing the reaction piston (37) against rotation relative to the valve output member (18).

4. Rotary slide valve according to Claim 2, **characterized in that** the metal concertina (38), in addition to securing the reaction piston (37) against rotation relative to the valve output member (18), is designed as a spring, by means of which one centring element (33) of the centring device (31) can be loaded in the direction of the other centring element (32).

5. Rotary slide valve according to one of Claims 2 to 4, **characterized in that** the reaction piston (37) is connected fixedly to the metal concertina (38).

6. Rotary slide valve according to one of Claims 2 to 4, **characterized in that** the reaction piston (37) is connected to the metal concertina (38) by means of a frictional or adhesive connection via a bush (44) fastened to the metal concertina (38).

7. Rotary slide valve according to Claim 6, **characterized in that** the reaction piston (37) and the bush (44) fastened to the metal concertina (38) are provided with a frictional or adhesive coating (45, 46) on surfaces confronting one another.

8. Rotary slide valve according to one of Claims 1 to 7, **characterized in that** the other centring element (32) connected non-rotatably and non-displaceably to the rotary slide (4) in a predetermined position is produced in one piece with the rotary slide (4).

9. Rotary slide valve according to one of Claims 1 to 8, **characterized in that** the recesses (34, 35) of the two centring elements (32, 33) are designed with oblique surfaces inclined to one another in a V-shaped manner or with arcuate surfaces.

10. Rotary slide valve according to Claim 4, **characterized in that** the metal concertina (38) is designed with an adjustable spring force.

## Revendications

1. Soupape à tiroir rotatif pour directions assistées de véhicules automobiles, avec un premier élément de soupape, qui assemblé sans rotation relative à un organe d'entrée de soupape (23), et avec un deuxième élément de soupape, qui est assemblé sans rotation relative à un organe de sortie de soupape (18), et avec les caractéristiques supplémentaires suivantes:
- un des éléments de soupape est constitué par un tiroir rotatif (4) situé radialement à l'extérieur et présente un alésage axial (6) et est assemblé à l'organe de sortie de soupape (18) par un ressort à barre de torsion (28) et par un accouplement à course morte (24),
- l'autre des éléments de soupape est guidé, sous forme d'un manchon de commande (7) situé radialement à l'intérieur, dans l'alésage axial (6) du tiroir rotatif (4),
- les deux éléments de soupape sont disposés dans un corps de soupape (2), d'une façon mobile l'un dans l'autre de manière coaxiale, et ils peuvent tourner l'un par rapport à l'autre au maximum de la course de rotation de l'accouplement à course morte (24),
- le tiroir rotatif (4) et le manchon de commande (7) présentent des rainures longitudinales de commande (21), limitées au moins en partie dans leur longueur axiale, situées respectivement à l'intérieur et à l'extérieur, qui coopèrent les unes avec les autres pour la commande d'un fluide sous pression vers et venant de deux chambres de travail (13, 14) d'un servomoteur (15),
- entre le tiroir rotatif (4) et l'organe de sortie de soupape (18) est disposé un dispositif de centrage (31), qui comporte deux éléments de centrage (32, 33) pouvant tourner l'un par rapport à l'autre, et au moins un corps de roulement (36) situé entre les deux éléments de centrage (32, 33), le corps de roulement (36) étant maintenu dans des cavités (34, 35) des deux éléments de centrage (32, 33),
- un élément de centrage (33) du dispositif de centrage (31) est assemblé sans rotation relative à un piston de réaction (37),
- un élément de centrage (32) du dispositif de centrage (31) est assemblé sans rotation relative au tiroir rotatif (4),
**caractérisée par** les caractéristiques suivantes:
- l'élément de centrage (33) assemblé fixement au piston de réaction (37) est assemblé de façon non rotative mais cependant coulissante en direction axiale à l'organe de sortie de soupape (18),
- l'autre élément de centrage (32) est assemblé au tiroir rotatif (4) dans une position prédéterminée, de façon non rotative et non coulissante,
- le piston de réaction (37) est disposé dans la région du dispositif de centrage (31), radialement à l'extérieur du tiroir rotatif (4) et autour de celui-ci, et il pénètre en direction axiale dans la région du tiroir rotatif (4).

2. Soupape à tiroir rotatif suivant la revendication 1, **caractérisée en ce que** l'assemblage sans rotation relative du piston de réaction (37) avec l'organe de sortie de soupape (18) est réalisé par un soufflet métallique (38).

3. Soupape à piston rotatif suivant la revendication 2, **caractérisée en ce que** le soufflet métallique (38) est configuré exclusivement pour empêcher la rotation relative du piston de réaction (37) par rapport à l'organe de sortie de soupape (18).

4. Soupape à tiroir rotatif suivant la revendication 2, **caractérisée en ce que** le soufflet métallique (38) est, en plus d'empêcher la rotation relative du piston de réaction (37) par rapport à l'organe de sortie de soupape (18), configuré en ressort, avec lequel le premier élément de centrage (33) du dispositif de centrage (31) peut être poussé en direction de l'autre élément de centrage (32).

5. Soupape à tiroir rotatif suivant l'une des revendications 2 à 4, **caractérisée en ce que** le piston de réaction (37) est assemblé fixement au soufflet métallique (38).

6. Soupape à tiroir rotatif suivant l'une des revendications 2 à 4, **caractérisée en ce que** le piston de réaction (37) est assemblé au soufflet métallique (38) par un assemblage à friction ou un assemblage collé, au moyen d'une douille (44) fixée au soufflet métallique (38).

7. Soupape à tiroir rotatif suivant la revendication 6, **caractérisée en ce que** le piston de réaction (37) et la douille (44) fixée au soufflet métallique (38) sont pourvus d'un revêtement de friction ou de collage (45, 46) sur des faces tournées l'une vers l'autre.

8. Soupape à tiroir rotatif suivant l'une quelconque des revendications 1 à 7, **caractérisée en ce que** l'autre élément de centrage (32), assemblé au tiroir rotatif (4) dans une position prédéterminée et de façon non rotative et non coulissante, est réalisé d'une seule pièce avec le tiroir rotatif (4).

9. Soupape à tiroir rotatif suivant l'une quelconque des revendications 1 à 8, **caractérisée en ce que** les cavités (34, 35) des deux éléments de centrage (32, 33) sont réalisées avec des faces obliques inclinées en forme de V l'une par rapport à l'autre ou avec des faces en forme d'arcs.

10. Soupape à tiroir rotatif suivant la revendication 4, **caractérisée en ce que** le soufflet métallique (38) est réalisé avec une force élastique réglable.
